# EUROPÄISCHE PATENTSCHRIFT

(11) **EP 2 500 612 B1**
(45) Veröffentlichungstag und Bekanntmachung des Hinweises auf die Patenterteilung: **23.10.2013**
(21) Anmeldenummer: 12000357.9
(22) Anmeldetag: 20.01.2012
(51) Int. Cl.: F16L 37/138

(54) **Steckkupplung mit einem zylindrischen Aufnahmeteil**
Coupling with a cylindrical holder part
Raccord enfichable doté d'un élément de réception cylindrique

(30) Priorität: 17.03.2011 DE 202011004090 U
(43) Veröffentlichungstag der Anmeldung: 19.09.2012
(73) Patentinhaber: HUMMEL AG, 79211 Denzlingen (DE)
(72) Erfinder: Reich, Günter, 79215 Elzach (DE); Zügel, Fritz, 79183 Waldkirch (DE); Wolf, Tobias, 79183 Waldkirch (DE); Hoch, Achim, 79183 Waldkirch (DE)
(74) Vertreter: Maucher, Wolfgang

(56) Entgegenhaltungen:
- EP-A1- 0 740 100
- DE-A1- 19 603 398
- DE-U1-202010 009 474

## Beschreibung

Die Erfindung betrifft eine Steckkupplung mit einem zylindrischen Aufnahmeteil und mit einem dazu passenden, axial mindestens teilweise in dieses Aufnahmeteil einführbaren und damit in axialer Richtung formschlüssig festlegbaren Einsteckteil, wobei im Kupplungsbereich der beiden zusammengesteckten Teile ein Kupplungsring vorgesehen ist, der in Kupplungsposition an der Innenseite des Kupplungsbereichs des Aufnahmeteils und gleichzeitig an der Außenseite des Kupplungsbereichs des Einsteckteils formschlüssig angreift.

Eine vergleichbare Steckkupplung ist aus DE 20 2010 009 474 U1 bekannt und hat sich bewährt. Die gegenseitige Kupplung oder Verriegelung des Aufnahmeteils und des Einsteckteils erfolgt dabei durch eine Drehbewegung und einen entsprechend geformten, durch die Drehbewegung zumindest teilweise in radialer Richtung bewegbaren oder auslenkbaren Kupplungsring.

Der Erfindung liegt die Aufgabe zu Grunde, eine Steckkupplung der vorstehend definierten Art zu schaffen, bei welcher für die Betätigung des Kupplungsrings eine axiale Bewegung an dem Betätigungsteil möglich ist und ausreicht und eine Drehbewegung für die Betätigung der Kupplung in Schließ- und/oder Lösebewegung nicht erforderlich ist.

Zur Lösung dieser Aufgabe ist die eingangs definierte Steckkupplung dadurch gekennzeichnet, dass der Aufnahmeteil in seinem Kupplungsbereich eine dem Kupplungsring aufnehmende Umfangsnut aufweist, dass der Kupplungsring derart vorgespannt ist, dass er entgegen seiner Vorspannung oder Federkraft in radialer Richtung in der Umfangsnut gehalten ist, wobei er an seinem Umfang unterbrochen ist, dass die Umfangsnut an der Innenseite des Kupplungsbereichs des Aufnahmeteils durch axiale Ausnehmungen oder Schlitze unterbrochen ist, in welche radial nach innen vorstehende Vorsprünge eines axial verstellbaren Schieberinges eingreifen, die in Löseposition den Kupplungsring unverformt lassen und in einer axialen Verschiebestellung von außen her beaufschlagen und radial nach innen verformt halten, und dass an dem Einsteckteil eine in Kupplungsposition in der selben Durchmesserebene wie die Umfangsnut an dem Aufnahmeteil befindliche weitere Ringnut vorgesehen ist, die durch die Steckbewegung des Einsteckteils in das Aufnahmeteil in die selbe Durchmesserebene wie die Umfangsnut am dem Aufnahmeteil verschiebbar ist und in die der Kupplungsring mit Hilfe der Vorsprünge des Schieberings radial mit einem Teil seines Querschnitts eindrückbar ist.

Die erfindungsgemäße Steckkupplung hat also in vorteilhafter Weise eine lösbare Verbindung zwischen Aufnahmeteil und Einsteckteil, die durch eine axiale Schiebebewegung an dem Schiebering hergestellt werden kann, so dass eine Drehbewegung zum Kuppeln der beiden Teile vermieden werden kann. Dabei ist auch die gesamte Konstruktion relativ einfach, weil die konzentrisch zur Längsmittelachse verlaufende Umfangsnut einen federelastischen Kupplungsring aufnehmen kann, der aufgrund seiner Unterbrechung in seiner Form und in seinem Umfang gegen seine Rückstellkraft verkleinert werden kann, was mit Hilfe der Vorsprünge des Schieberinges auf einfache Weise möglich ist. Durch diese Verkleinerung des Umfangs des Kupplungsrings entgegen seiner Federkraft gelangt er in eine parallele, in der selben Durchmesserebene angeordnete Ringnut des Einsteckteils, so dass er mit seinem Querschnitt in Kupplungsposition in beide Ringnuten eingreift und dadurch die beiden Teile formschlüssig miteinander verbindet. Das Einstecken des Einsteckteils ist dabei sehr einfach, weil dieser Kupplungsring aufgrund seiner Eigenspannung zunächst innenseitig in der Umfangsnut des Aufnahmeteiles versenkt ist, so dass das Einsteckteil diese Stelle passieren kann, bis dessen Ringnut auf gleicher Höhe liegt.

Zweckmäßig ist es also, wenn der Kupplungsring in seiner Ausgangslage in ungekuppelter Position aufgrund seiner Eigenspannung vollständig in der Ringnut des Aufnahmeteils versenkt und/oder soweit aufgeweitet ist, dass das Einsteckteil durch ihn hindurchsteckbar ist, und wenn der Außenquerschnitt oder Außendurchmesser des Kupplungsbereichs des Einsteckteils gleich oder kleiner als der Innendurchmesser des aufgeweiteten Kupplungsringes ist. Solange der Kupplungsring also seine durch seine Eigenspannung bewirkte aufgeweitete Lage einnimmt, kann das Einsteckteil in ihn eingeführt und relativ zu ihm soweit verschoben werden, bis die Umfangsnut des Einsteckteiles auf gleicher Höhe wie der Kupplungsring angeordnet ist. Diese Position kann zweckmäßiger Weise durch einen Anschlag bestimmt oder vorgegeben sein.

Vorteilhaft für eine leicht gängige Verformung des Kupplungsringes mit Hilfe der Vorsprünge an dem Schiebering ist es, wenn die radial innenseitig an dem Schiebering vorstehenden Vorsprünge in axialer Richtung entgegen der Einsteck- oder Schieberichtung und entgegen der Kupplungsrichtung des Schiebringes ansteigende Auflaufschrägen haben, die bei der axialen Verschiebung des Schieberinges in axialer Kupplungsring die Außenseite des Kupplungsringes beaufschlagen, und wenn der Kupplungsring dadurch radial nach innen verformbar und in die Ringnut des Kupplungsbereichs des Einsteckteils - teilweise eingreifend - verstellbar ist. Der den Kupplungsring im Bereich der Schlitze des Aufnahmeteils mit seinen innenliegenden Vorsprüngen übergreifende Schiebering kann also nach dem Einstecken des Einsteckteils in Einsteckrichtung oder gegebenenfalls bei entgegengesetzter Ausgangslage entgegen der Einsteckrichtung verschoben werden und mit seinen einen schrägen Anstieg oder eine Auflauffläche aufweisenden Vorsprüngen den Kupplungsring allmählich radial nach innen verformen, um ihn in seine Kupplungsposition zu bringen, in welcher er einen verkleinerten Durchmesser hat.

Am in Schieberichtung des Schieberinges rückwärtigen Ende der Auflaufschrägen der radial nach innen vorstehenden Vorsprünge kann ein Anschlag vorgesehen sein - bevorzugt an jedem der Vorsprünge, gegebenenfalls aber auch nur an einzelnen Vorsprüngen - an welchem Anschlag der durch die Vorsprünge radial einwärts verstellte Kupplungsring in Kupplungsposition axial anliegt. Somit ergibt sich eine genaue Definition der Lage des Aufnahmeteils und des Steckteils relativ zueinander und der oder die Anschläge sorgen dafür, dass der Kupplungsring in eine Lage gelangt, in welcher er in beide Umfangsnuten, nämlich die des Aufnahmeteiles und der des Einsteckteils gleichzeitig eingreift.

Am in axialer Verstellrichtung rückwärtigen Ende der Auflaufschräge kann eine Einsenkung vorgesehen sein, deren der Aufschlagschräge abgewandte Begrenzung den Anschlag bildet. Ferner kann der Kupplungsring in Kupplungsposition formschlüssig in die jeweilige Einsenkung der Betätigungsvorsprünge eingreifen, so dass er in Kupplungsstellung sowohl in die Umfangsnut des Einsteckteils als auch die des Aufnahmeteils angreift, wobei er außerdem in die die Umfangsnut des Aufnahmeteils in dieser Lage fortsetzenden Einsenkungen eingreift. Die Einsenkungen vervollständigen also die Umfangsnut des Aufnahmeteils an den Stellen, an denen die in axialer Richtung verlaufenden Schlitze für die Vorsprünge angeordnet sind. In Kupplungsposition sind also das Aufnahmeteil, das Einsteckteil und auch der Schiebering mit seinen Vorsprüngen und Einsenkungen in einer definierten Lage relativ zueinander durch den Kupplungsring festgelegt.

Günstig ist es, wenn die Auflaufschrägen oder Schrägflächen an den innenseitigen Vorsprüngen des Schieberings bis zu einer größeren radialen Innenabmessung reichen, als es dem Sitz des Kupplungsrings in Kupplungsposition in den Einsenkungen entspricht, und wenn der Kupplungsring beim Betätigen des Schieberinges mit seinen Vorsprüngen in radialer Richtung zunächst über seine Kupplungsposition hinaus radial nach innen verformbar oder verformt ist und am Ende der Verstellung des Schieberinges aufgrund der Rückstellkraft selbsttätig in die Einsenkung hinter den Auflaufschrägen und damit in seine Kupplungsposition eingerastet angeordnet ist.

Der radial innen vorstehende Vorsprung des Schieberinges kann einen schrägen Übergang von seiner höchsten Stelle in die Einsenkung aufweisen. Dadurch ist es möglich, den Schiebering auch entgegengesetzt zu verschieben und dadurch den Kupplungsring entsprechend diesem schrägen Übergang sich allmählich wieder nach außen ausdehnen lassen, um die Kupplungsposition auch wieder zu lösen.

Am Umfang des Kupplungsbereichs des Aufnahmeteils können mehrere axial verlaufende parallele, am stirnseitigen Ende des Aufnahmeteils frei mündende Schlitze, beispielsweise drei, vier, fünf, sechs oder mehr Schlitze für eine entsprechende Anzahl von Vorsprüngen an dem Schiebering vorgesehen und insbesondere in Umfangsrichtung gleichmäßig verteilt sein. Dabei kann die Breite der Schlitze für den Eingriff der Vorsprünge des Schieberinges umso kleiner sein, je mehr derartige Schlitze vorgesehen sind. Eine größere Anzahl solcher Schlitze kann dabei die Genauigkeit der Einführbewegung des Einsteckteils in das Aufnahmeteil unterstützen und verbessern.

Zweckmäßig ist es dabei auch für eine präzise Bewegung und gute Führung des an der Außenseite des Kupplungsbereichs des Aufnahmeteils angeordneten Schieberinges, wenn die Breite der Schlitze und die Breite der darin eingreifenden Vorsprünge übereinstimmen und die Vorsprünge mit einem Schiebesitz relativ zu den Schlitzen verstellbar sind. Somit ist der Schiebering auch gegen ungewollte Verdrehungen in dem Maße gesichert, wie es der Toleranz der Vorsprünge innerhalb den Schlitzen entspricht.

Insbesondere bei Kombination einzelner oder mehrerer der vorbeschriebenen Merkmale und Maßnahmen ergibt sich eine Steckkupplung für zylindrische Teile, beispielsweise für Rohre oder Hülsen oder auch für elektrische Steckverbinder, bei welchen in dem Aufnahmeteil ein Isolierkörper mit Kontakten und in dem Einsteckteil ein weiterer Isolierkörper mit den Gegenkontakten angeordnet sind.

Nachstehend sind Ausführungsbeispielsweise der Erfindung anhand der Zeichnungen näher beschrieben. Es zeigt in zum Teil schematisierter Darstellung:

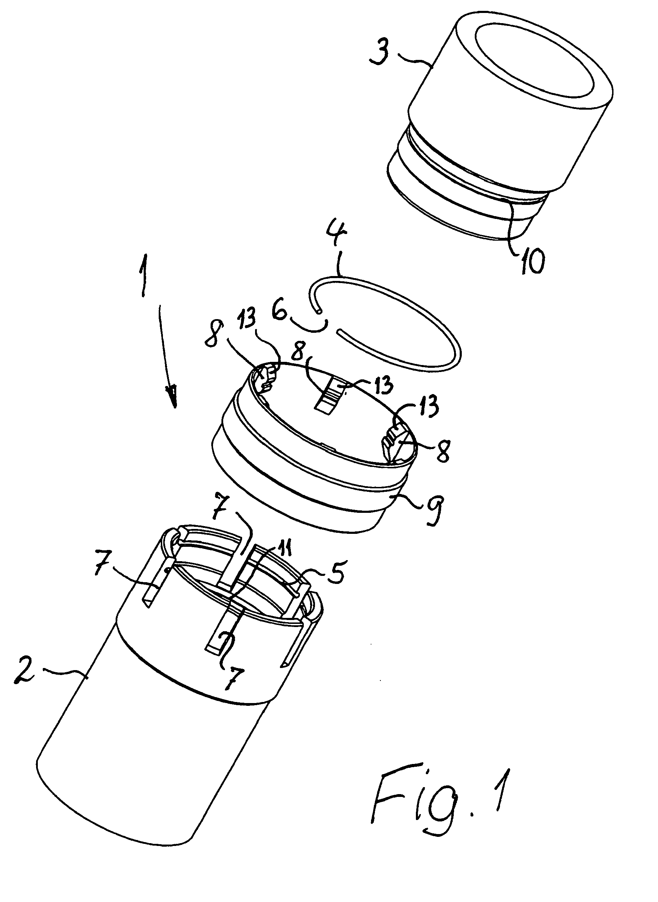

- Fig. 1: die Einzelteile der erfindungsgemäßen Steckkupplung vor dem Montieren und Zusammenstecken in einer schaubildlichen Explosionsdarstellung,

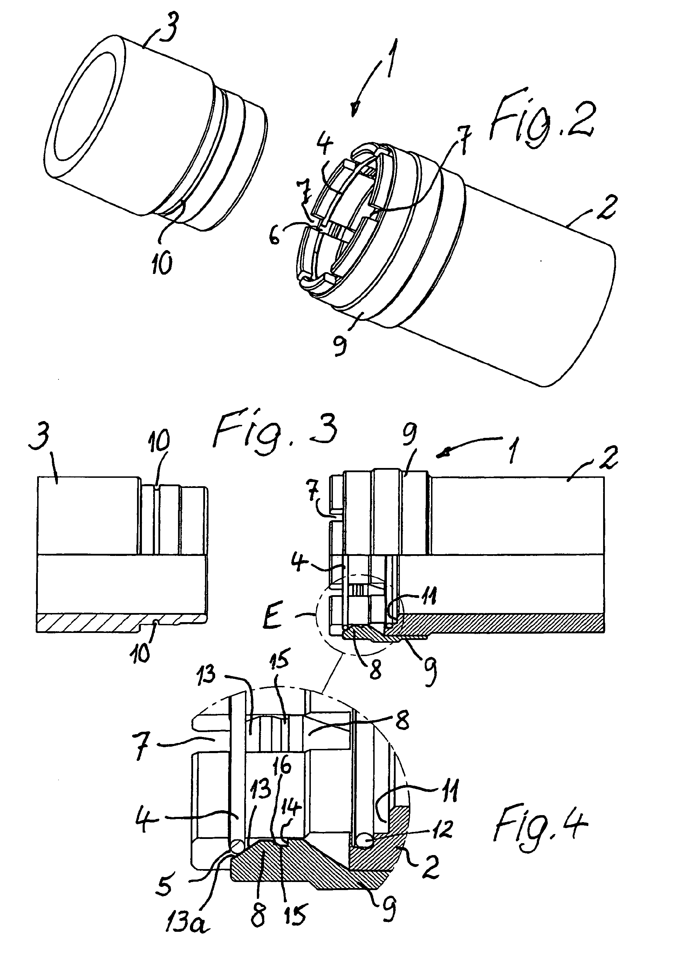

- Fig. 2: das montierte, mit einem Schiebering versehene Aufnahmeteil, an dessen Innenseite seines Kupplungsbereichs ein unterbrochener, federelastischer Kupplungsring in einer Umfangsnut angeordnet ist, wobei das Einsteckteil noch getrennt von dem Aufnahmeteil ist,
- Fig. 3: eine zur Hälfte im Längsschnitt gehaltene Seitenansicht des Aufnahmeteils und des Einsteckteils gemäß Fig. 2,
- Fig. 4: in vergrößertem Maßstab die mit einem strichpunktierten Kreis in Fig. 3 markierte Einzelheit E, wobei der Schiebering noch vor der Kupplungsposition angeordnet ist und den Kupplungsring mit einer Auflaufschräge eines innenseitigen Vorsprungs berührt, wobei in Schieberichtung im Anschluss an die Auflaufschräge eine Einsenkung angeordnet ist, die bis zu dem Kupplungsring durch das Verschieben des Schieberinges und damit des Vorsprunges mit seiner Auflaufschräge bewegbar ist und den dadurch radial nach innen verformten Kupplungsring mit aufnimmt,

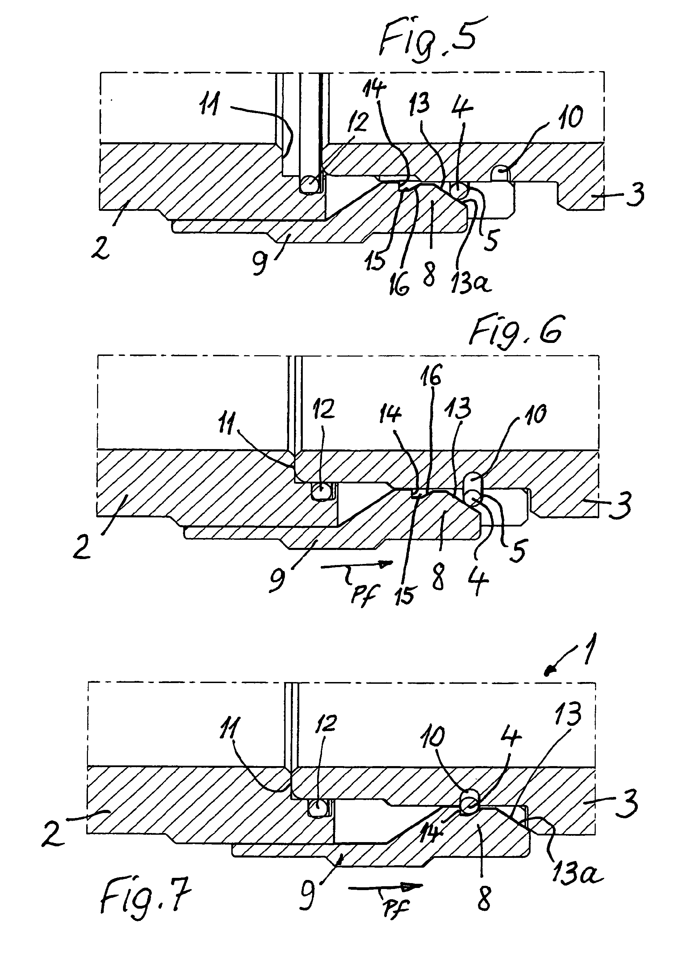

- Fig. 5: in etwas vergrößertem Maßstab und in um 180 Grad gegenüber Fig. 4 gewendeter Darstellung den Eingriff des Einsteckteils in den Kupplungsbereich des Aufnahmeteils und in den Bereich des dort angeordneten Schieberings, wobei die an dem Einsteckteil vorgesehene Ringnut noch axial von dem Kupplungsring beabstandet ist,
- Fig. 6: eine der Fig. 5 entsprechende Darstellung, die das Einsteckteil in einer gegenüber Fig. 5 axial in das Aufnahmeteil verschobener Position zeigt, wobei die Ringnut in der selben Durchmesserebene wie der Kupplungsring angeordnet ist, der Schiebering aber noch nicht verschoben ist,
- Fig. 7: eine den Fig. 5 und 6 entsprechende Darstellung, wobei der Schiebering gegenüber seiner Position in Fig. 6 nunmehr entgegen der Einsteckrichtung des Einsteckteils über dessen Kupplungsbereich verschoben ist, wodurch die Aufschräge des Vorsprunges den Kupplungsringes radial in die Ringnut des Einsteckteils drückt, sowie

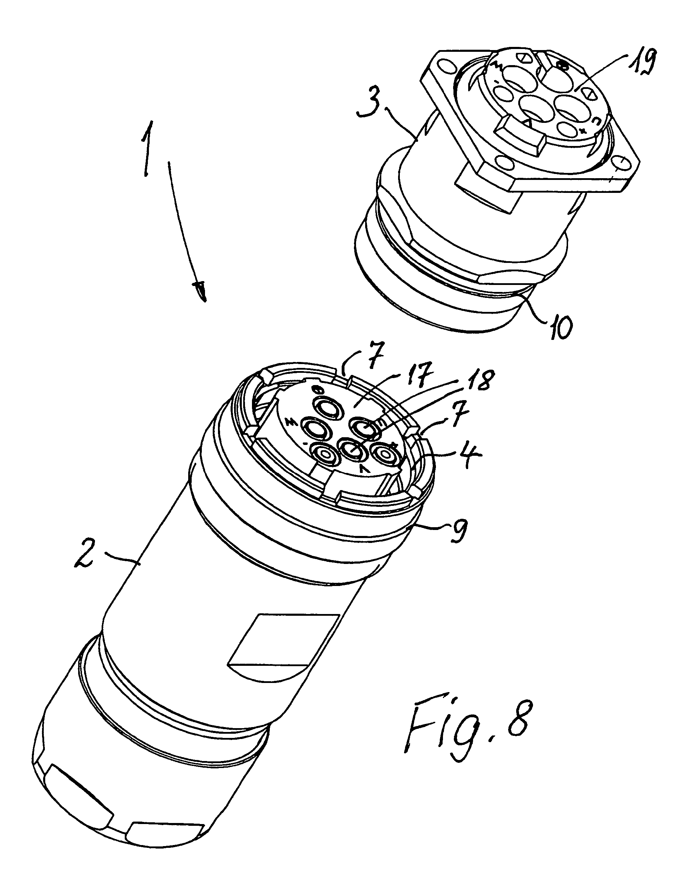

- Fig. 8: eine Steckkupplung mit einem Aufnahmeteil und einem axial teilweise in dieses einführbaren Einsteckteil, wobei sowohl in dem Aufnahmeteil als auch in dem Einsteckteil mittels Isolierungen gehaltene Kontakte angeordnet sind, die sich in Kupplungsposition elektrisch leitend berühren, also einen Steckverbinder bilden, der in Fig. 8 in Löseposition dargestellt ist.

Eine im Ganzen mit 1 bezeichnete, in Fig. 7 in ihrer Gebrauchsstellung befindliche Steckkupplung besteht im wesentlichen aus einem zylindrischen Aufnahmeteil 2 und einem dazu passenden, axial teilweise in dieses Aufnahmeteil 2 einführbaren und damit in axialer Richtung formschlüssig festlegbaren Einsteckteil 3. Durch das Einführen des Einsteckteils 3 in das Aufnahmeteil 2 wird die Steckkupplung 1 in der nachstehend beschriebenen Weise gebildet oder hergestellt, dass heißt, Einsteckteil 3 und Aufnahmeteil 2 werden miteinander gekuppelt. Dieser Einsteckvorgang mit dem gegenseitigen Verkuppeln ist vor allem in den Fig. 5 bis 7 dargestellt.

Im Kupplungsbereich der beiden zusammengesetzten Teile 2 und 3, also in dem Bereich, in welchem sich die beiden Teile 2 und 3 axial überdecken oder umgreifen, ist ein in Kupplungsposition beide Teile beaufschlagender Kupplungsring 4 vorgesehen, der in Kupplungsposition gemäß Fig. 7 an der Innenseite des Kupplungsbereichs des Aufnahmeteils 2 und gleichzeitig an der Außenseite des Kupplungsbereichs des Einsteckteils 3 in noch zu beschreibender Weise formschlüssig angreift.

Vor allem anhand der Fig. 2 bis 4 wird deutlich, dass der Aufnahmeteil 2 in seinem Kupplungsbereich eine den schon erwähnten Kupplungsring 4 aufnehmende Umfangsnut 5 aufweist, wobei der Kupplungsring 4 derart vorgespannt ist, dass er entgegen seiner Vorspannung oder Federkraft in radialer Richtung in dieser Umfangsnut 5 gehalten ist. In Ausgangslage oder vor dem Einkuppeln befindet sich also dieser Kupplungsring 4 innenseitig an dem Einsteckteil 2.

Damit der Kupplungsring 4 aus seiner Ausgangslage radial nach innen verformt werden kann, um mit dem Einsteckteil 3 in Formschluss zu gelangen, ist er an seinem Umfang unterbrochen, was in Fig. 1 deutlich erkennbar ist. Diese Unterbrechung 6 reicht über einen so großen Umfangsbereich des Kupplungsrings 4, dass er auch problemlos so weit hinsichtlich seines Umfanges und Durchmesser verkleinert werden kann, dass er von der Stirnseite des Aufnahmeteils 2 aus in die Umfangsnut 5 eingesetzt werden kann, wo er dann aufgrund seiner Vorspannung festliegt.

Die Umfangsnut 5 ist dabei an der Innenseite des Kupplungsbereichs des Aufnahmeteils 2 durch axiale Ausnehmungen oder Schlitze 7 unterbrochen, die auch den Kupplungsbereich des Aufnahmeteils 2 in radialer Richtung vollständig durchsetzen und an der Stirnseite des Aufnahmeteils, von welcher aus das Einsteckteil 3 einführbar ist, offen münden.

In diese Schlitze 7 greifen radial nach innen vorstehende Vorsprünge 8 eines axial gegenüber dem Aufnahmeteil 2 verstellbaren Schieberinges 9 ein, der gemäß den Fig. 2 bis 8 an der Außenseite des Aufnahmeteils 2 angeordnet ist, so dass seine innenliegenden Vorsprünge 8 von außen nach innen in die Schlitze 7 ragen.

Diese Vorsprünge 8 lassen in Löseposition den Kupplungsring 4 unverformt, wie man es deutlich in den Fig. 4, 5 und 6 erkennt.

In einer demgegenüber axialen Verschiebestellung gemäß Fig. 7 beaufschlagen diese Vorsprünge 8 den Kupplungsring 4 von außen her und halten ihn radial nach innen verformt, so dass dadurch also dieser Kupplungsring 4 nun den Einsteckbereich nicht mehr vollständig und durchgängig freigibt.

An dem Einsteckteil 3 ist eine in Kupplungsposition in der selben Durchmesserebene wie die Umfangsnut 5 an dem Aufnahmeteil 2 befindliche Ringnut 10 vorgesehen, die durch die Steckbewegung in die selbe Durchmesserebene wie die Umfangsnut 5 an dem Aufnahmeteil 2 verschiebbar ist und in die der Kupplungsring 4 mit Hilfe der Vorsprünge 8 des Schieberinges 9 radial mit einem Teil seines Querschnitts eindrückbar ist, wie es Fig. 7 zeigt.

Aufgrund dieser Anordnung ist es also möglich, das Einsteckteil 3 in die stirnseitige Öffnung des Aufnahmeteils 2 axial einzuführen und einzustecken, wie es in Fig. 5 dargestellt ist, oder das Aufnahmeteil 2 über das Einsteckteil 3 zu stülpen.

Dabei wird das Einsteckteil 3 gemäß Fig. 6 bis zu einem innenliegenden Anschlag 11 innerhalb des Aufnahmeteils 2 verschoben, wodurch gleichzeitig auch eine in diesem Bereich angeordnete Dichtung 12 wirksam wird, die die beiden Teile 2 und 3 gegenseitig abdichtet. In dieser Lage befindet sich die Ringnut 10 in der selben Durchmesserebene wie der Kupplungsring 4 und somit auch wie die Umfangsnut 5 an dem Aufnahmeteil 2.

Nunmehr kann der Schiebering 9 aus seiner in den Fig. 5 und 6 dargestellten Ausgangslage axial entgegen der Einsteckrichtung des Einsteckteils 3 in Richtung des Pfeiles Pf in Fig. 6 und 7 verschoben werden, um den Kupplungsring 4 aus seiner größtmöglichen radialen Lage soweit nach innen zu verformen, dass er mit einem Teil seines Querschnitts auch in die Ringnut 10 eingreift.

Man erkennt deutlich in den Fig. 4, 5 und 6, dass der Kupplungsring 4 in seiner Ausgangslage vor dem Kuppeln mit dem Einsteckteil 3, also in ungekuppelter Position, aufgrund seiner Eigenspannung vollständig in der Umfangsnut 5 des Aufnahmeteils 2 versenkt ist, so dass das Einsteckteil 3 mit seinem Kupplungsbereich durch ihn hindurchgeschoben werden kann. Dabei ist der Außenquerschnitt oder Außendurchmesser des Kupplungsbereichs des Einsteckteils 3 gleich oder kleiner als der Innendurchmesser dieses aufgeweiteten Kupplungsringes 4 und auch kleiner als der Kupplungsbereichs des Aufnahmeteils 2. Die Durchmesserverhältnisse sind so gewählt, dass das Einsteckteil 3 gegenüber der Kupplungsinnenseite des Aufnahmeteils 2 einen Schiebesitz hat.

Für die Verformung des Kupplungsringes 4 in die Ringnut 10 sind die schon erwähnten radial innenseitig an dem Schiebering 9 vorstehenden Vorsprünge 8 mit einer in axialer Richtung entgegen der Einsteckrichtung und Kupplungsrichtung des Schieberinges 9 ansteigenden Auflaufschräge 13 versehen, deren Anfang 13a in radialer Richtung weiter außen als der in Ausgangslage befindliche Kupplungsring 4 liegt, so dass dieser Anfang 13a der Auflaufschräge 13 den Kupplungsring 4 gemäß Fig. 5 und 6 untergreifen kann, während dieser noch vollständig in der Umfangsnut 5 liegt.

Diese Auflaufschräge 13 beaufschlagt bei der axialen Verschiebung des Schieberinges 9 in Richtung des Pf, also in axialer Kupplungsrichtung beziehungsweise entgegen der Einsteckrichtung des Einsteckteils 3 die Außenseite des Kupplungsringes 4, wodurch der Kupplungsring 4 nach innen verformt und in die Ringnut 10 des Kupplungsbereichs des Einsteckteils 3 verstellt wird, weil die Auflaufschräge 13 entgegen der Schieberichtung nahezu bis zur Außenseite des Kupplungsbereichs des Einsteckteils 3 - radial nach innen - ansteigt.

Wichtig ist dabei, dass die Ringnut 10 eine größere radiale Tiefe hat, als es dem Eingriff des Kupplungsringes 4 in Gebrauchsstellung entspricht, so dass also der Kupplungsring 4 zunächst tiefer in diese Ringnut 10 verstellt werden kann, als es seiner Kupplungsposition entspricht. Praktisch kann er dabei sogar vollständig aus der Umfangsnut 5 austreten, in die er dann aber in noch zu beschreibender Weise wieder teilweise eintritt, um die axiale Kupplung der beiden Teile 2 und 3 zu vollenden.

Für eine definierte Kupplungslage ist am in Schieberichtung rückwärtigen Ende der Auflaufschrägen 13 an den radial nach innen vorstehenden Vorsprüngen 8 ein Anschlag 14 vorgesehen, der in Kupplungsstellung gemäß Fig. 7 mit dem Rand der Ringnut 10 bündig ist und an welchem der durch die Vorsprünge 8 radial einwärts verstellte Kupplungsring 4 in Kupplungsposition gemäß Fig. 7 axial anliegt. Gleichzeitig kann dadurch eine zu weite Verschiebung des Schieberinges 9 verhindert werden.

Im Ausführungsbeispiel ist dabei am in axialer Verstellrichtung rückwärtigen Ende der Auflaufschrägen 13 eine Einsenkung 15 vorgesehen, deren den Auflaufschrägen 13 abgewandte Begrenzung den schon erwähnten Anschlag 14 bilden. Man erkennt in Fig. 7 deutlich, dass der Kupplungsring 4 in Kupplungsposition formschlüssig in die jeweilige Einsenkung 15 der Betätigungsvorsprünge 8 eingreift und also jeweils in den Bereichen der Schlitze 7 nicht frei ist, sondern in den Einsenkungen 15 innenseitig an den Vorsprüngen 8 des Schieberinges 9 anliegt.

Die Auflaufschrägen 13, im wesentlichen Schrägflächen, die etwas konkav gekrümmt sein können, um an die Rundung des Umfangs des Kupplungsringes 4 angepasst zu sein, reichen an den innenseitigen Vorsprüngen 8 des Schieberinges 9 bis zu einer größeren radialen Innenabmessung, als es dem Sitz des Kupplungsringes 4 in Kupplungsposition entspricht. Dies wird vor allem anhand der Fig. 7 deutlich. Dabei reichen diese Auflaufschrägen 13 sogar bis an die Außenseite des Kupplungsbereichs des Einsteckteils 3. Dies führt dazu, dass der Kupplungsring 4 beim Betätigen des Schieberinges 9 und dessen Verstellung in Richtung des Pf mit seinen Vorsprüngen 8 in radialer Richtung zunächst über seine Kupplungsposition hinaus radial nach innen verformt wird, was aufgrund der größeren radialen Tiefe der Ringnut 10 möglich ist. Am Ende der Verstellung des Schieberinges 8 springt dann der Kupplungsring 4 aufgrund seiner Eigenspannung und Rückstellkraft selbsttätig in die Einsenkungen 15 hinter den Auflaufschrägen 13 und damit in Kupplungsposition, wo er nunmehr eingerastet angeordnet ist.

Dabei erkennt man außerdem in den Fig. 5 bis 7, dass die radial innen vorstehenden Vorsprünge 8 des Schieberinges 9 einen schrägen Übergang 16 von der höchsten Stelle des jeweiligen Vorsprunges 8 in die Einsenkung 15 aufweisen, so dass auch die Verschiebung des Schieberinges 9 in entgegengesetzter Richtung, also entgegen dem Pfeil Pf möglich ist, um die Kupplung wieder zu lösen. Wird der Schiebering 9 aus der Kupplungsposition entgegen dem Pfeil Pf zurückgeschoben, wird der Kupplungsring 4 zunächst wieder tiefer in die Ringnut 10 gedrückt, bis die Auflaufschräge 13 in den Bereich des Kupplungsringes 4 gelangt, so dass eine weitere Rückzugsbewegung des Schieberinges 9 zu der Anordnung gemäß Fig. 6 führt, wonach dann das Einsteckteil 3 aus dem Aufnahmeteil 2 in axialer Richtung herausgeschoben oder -gezogen werden kann.

Es sei an dieser Stelle erwähnt, dass alle vorbeschriebenen axialen Bewegungen, also zum Beispiel die Verschiebung des Schieberinges 9 Relativbewegungen sind und der Schiebering 9 festgehalten und stattdessen Aufnahmeteil 2 und Einsteckteil 3 relativ dazu verschoben werden könnten. Die einfache Betätigung beim Kuppeln ergibt sich jedoch bei der Verschiebung des Schieberinges 9.

Vor allem in den Fig. 1 und 2 erkennt man, dass am Umfang des Kupplungsbereichs des Aufnahmeteils 2 mehrere Schlitze 7, im Ausführungsbeispiel sechs derartige Schlitze 7 für eine entsprechende Anzahl von Vorsprüngen 8 an dem Schiebering 9 vorgesehen und dabei in Umfangsrichtung gleichmäßig verteilt sind. Entsprechend gleichmäßig wird auch der Kupplungsring 4 bei dem Kupplungsvorgang gegen seine Rückstellkraft elastisch verformt. Die Schlitze 7 verlaufen dabei in axialer Richtung und parallel zueinander und ergeben eine gute axiale Führung für den Schiebering 9.

Die Breite der Schlitze 7 für den Eingriff der Vorsprünge 8 des Schieberinges 9 kann dabei umso kleiner sein, je mehr derartige Schlitze 7 vorgesehen sind und umgekehrt kann die Breite größer sein, wenn weniger Schlitze gewählt werden.

Die Breite der frei mündenden, offenen Schlitze 7 und die Breite der darin eingreifenden Vorsprünge 8 stimmt dabei überein, dass heißt die Vorsprünge 8 füllen die Schlitze 7 über deren gesamte Breite aus, sind aber in einem Schiebesitz relativ zu diesen Schlitzen 7 verstellbar. Somit ist der Schiebering 9 auch gegen ungewollte Verdrehbewegungen durch diese gegenseitige Führung der Vorsprünge 8 und der Schlitze 7 gesichert.

Im Ausführungsbeispiel gemäß Fig. 8 erkennt man, dass in dem Aufnahmeteil 2 eine Isolierung 17 mit Kontakten 18 angeordnet ist und dass in dem Einsteckteil 3 eine dazu passende Halterung 19 für Gegenkontakte angeordnet ist, so dass diese Steckkupplung 1 insgesamt einen Steckverbinder mit beim Zusammenstecken eine Stromverbindung herstellenden Teilen dargestellt, bei welchem die selben Mittel zur gegenseitigen Kupplung und Fixierung der Kupplungsposition, insbesondere ein Kupplungsring 4 vorgesehen ist, der in Kupplungsposition gleichzeitig in eine Umfangsnut 5 an dem Aufnahmeteil 2 und in eine Ringnut 10 an dem Einsteckteil greift und mit Hilfe eines Schieberinges 9 mit Vorsprüngen 8 betätigt werden kann.

Die Steckkupplung 1 mit einem zylindrischen Aufnahmeteil 2 und einem dazu passenden und axial teilweise darin einführbaren Einsteckteil 3 weist im gemeinsamen Kupplungsbereich einen die beiden zusammengesteckten Teile gleichzeitig beaufschlagenden Kupplungsring 4 auf, der an seinem Umfang eine Unterbrechung 6 hat und somit gegen seine Elastizität unter Verkleinerung seines Umfanges zusammengedrückt werden kann. Um diesen Kupplungsring 4 soweit zusammenzudrücken, dass er aus der ihn zunächst vollständig aufnehmenden Umfangsnut 5 teilweise in eine Ringnut 10 an dem Einsteckteil 3 eingreift, ist ein Schiebering 9 mit inneren Vorsprüngen 8 an der Außenseite des Aufnahmeteils 2 verschiebbar angeordnet, dessen Vorsprünge 8 in Schlitze 7 des Aufnahmeteils eingreifen und dort den über diese Schlitze 7 hinweglaufenden Kupplungsring 5 außenseitig beaufschlagen und mit Hilfe von Schrägflächen 13 durch die axiale Verschiebung des Schieberinges 9 radial bis in die Ringnut des Einsteckteils 3 verformen und in dieser Lage festhalten.

## Patentansprüche

1. Steckkupplung (1) mit einem zylindrischen Aufnahmeteil (2) und mit einem dazu passenden, axial mindestens teilweise in dieses einführbaren und damit in axialer Richtung formschlüssig festlegbaren Einsteckteil (3), wobei im Kupplungsbereich der beiden zusammengesteckten Teile ein Kupplungsring (4) vorgesehen ist, der in Kupplungsposition an der Innenseite des Kupplungsbereichs des Aufnahmeteils (2) und gleichzeitig an der Außenseite des Kupplungsbereichs des Einsteckteils (3) formschlüssig angreift, **dadurch gekennzeichnet, dass** der Aufnahmeteil (2) in seinem Kupplungsbereich eine den Kupplungsring (4) aufnehmende Umfangsnut (5) aufweist, dass der Kupplungsring (4) derart vorgespannt ist, dass er entgegen seiner Vorspannung oder Federkraft in radialer Richtung in der Umfangsnut (5) gehalten ist, wobei er an seinem Umfang unterbrochen ist, dass die Umfangsnut (5) an der Innenseite des Kupplungsbereichs des Aufnahmeteils (2) durch axiale Ausnehmungen oder Schlitze (7) unterbrochen ist, in welche radial nach innen vorstehende Vorsprünge (8) eines axial verstellbaren Schieberinges (9) eingreifen, die in Löseposition den Kupplungsring (4) unverformt lassen und in einer axialen Verschiebestellung von außen her beaufschlagen und radial nach innen verformt halten, und dass an dem Einsteckteil (3) eine in Kupplungsposition in derselben Durchmesserebene wie die Umfangsnut (5) an dem Aufnahmeteil (2) befindliche Ringnut (10) vorgesehen ist, die durch die Steckbewegung in dieselbe Durchmesserebene wie die Umfangsnut (5) an dem Aufnahmeteil (2) verschiebbar ist und in die der Kupplungsring (4) mit Hilfe der Vorsprünge (8) des Schieberinges (9) radial mit einem Teil seines Querschnitts eindrückbar ist.

2. Steckkupplung nach Anspruch 1, **dadurch gekennzeichnet, dass** der Kupplungsring (4) in seiner Ausgangslage in ungekuppelter Position aufgrund seiner Eigenspannung vollständig in der Umfangsnut (5) des Aufnahmeteils (2) versenkt und/oder soweit aufgeweitet ist, dass das Einsteckteil durch ihn hindurch passt, und dass der Außenquerschnitt oder Außendurchmesser des Kupplungsbereichs des Einsteckteils (3) gleich oder kleiner als der Innendurchmesser des aufgeweiteten Kupplungsringes (4) ist.

3. Steckkupplung nach Anspruch 1 oder 2, **dadurch gekennzeichnet, dass** die radial innenseitig an dem Schiebering (9) vorstehenden Vorsprünge (8) eine in axialer Richtung entgegen der Einsteckrichtung und Kupplungsrichtung des Schieberinges (9) ansteigende Auflaufschräge (13) haben, die bei der axialen Verschiebung des Schieberinges (9) in axialer Kupplungsrichtung die Außenseite des Kupplungsringes (4) beaufschlagt, und dass der Kupplungsring (4) dadurch radial nach innen verformbar und in die Ringnut (10) des Kupplungsbereichs des Einsteckteils (3) verstellbar ist.

4. Steckkupplung nach Anspruch 3, **dadurch gekennzeichnet, dass** am in Schieberichtung rückwärtigen Ende der Auflaufschrägen (13) der radial nach innen vorstehenden Vorsprünge (8) ein Anschlag (14) vorgesehen ist, an welchem der durch die Vorsprünge (8) radial einwärts verstellte Kupplungsring (4) in Kupplungsposition axial anliegt.

5. Steckkupplung nach Anspruch 4, **dadurch gekennzeichnet, dass** am in axialer Verstellrichtung rückwärtigen Ende der Auflaufschräge (13) eine Einsenkung (15) vorgesehen ist, deren der Auflaufschräge (13) abgewandte Begrenzung den Anschlag (14) bildet, und dass der Kupplungsring (4) in Kupplungsposition formschlüssig in die jeweilige Einsenkung (15) der Betätigungsvorsprünge (8) eingreift.

6. Steckkupplung nach Anspruch 5, **dadurch gekennzeichnet, dass** die Auflaufschrägen (13) oder Schrägflächen an den innenseitigen Vorsprüngen (8) des Schieberings (9) bis zu einer größeren radialen Innenabmessung reichen, als es dem Sitz des Kupplungsringes (4) in Kupplungsposition entspricht, und dass der Kupplungsring (4) beim Betätigen des Schieberinges (9) mit seinen Vorsprüngen (8) in radialer Richtung zunächst über seine Kupplungsposition hinaus radial nach innen verformbar oder verformt ist und am Ende der Verstellung des Schieberinges (8) aufgrund der Rückstellkraft selbsttätig in der Einsenkung (15) hinter den Auflaufschrägen (13) und damit in seiner Kupplungsposition einrastet angeordnet ist.

7. Steckkupplung nach Anspruch 5 oder 6, **dadurch gekennzeichnet, dass** der radial innen vorstehende Vorsprung (8) des Schieberinges (9) einen schrägen Übergang (16) von seiner höchsten Stelle in die Einsenkung (15) aufweist.

8. Steckkupplung nach einem der Ansprüche 1 bis 7, **dadurch gekennzeichnet, dass** am Umfang des Kupplungsbereichs des Aufnahmeteils (2) mehrere Schlitze (7), beispielsweise drei, vier, fünf, sechs oder mehr Schlitze (7) für eine entsprechende Anzahl von Vorsprüngen (8) an dem Schiebering (9) vorgesehen und insbesondere in Umfangsrichtung gleichmäßig verteilt sind.

9. Steckkupplung nach einem der Ansprüche 1 bis 8, **dadurch gekennzeichnet, dass** die Breite der Schlitze (7) im Kupplungsbereich des Aufnahmeteils (2) und die Breite der darin eingreifenden Vorsprünge (8) des Schieberinges (9) übereinstimmen und dass die Vorsprünge (8) mit einem Schiebesitz relativ zu den Schlitzen (7) verstellbar sind.

## Claims

1. Plug-in coupling (1) having a cylindrical receiving part (2) and having a plug-in part (3) which fits with respect to the said receiving part (2), can be introduced axially at least partially into the latter and can therefore be fixed in the axial direction in a positively locking manner, a coupling ring (4) being provided in the coupling region of the two parts which are plugged together, which coupling ring (4), in the coupling position, acts in a positively locking manner on the inner side of the coupling region of the receiving part (2) and at the same time on the outer side of the coupling region of the plug-in part (3), **characterized in that**, in its coupling region, the receiving part (2) has a circumferential groove (5) which receives the coupling ring (4), **in that** the coupling ring (4) is prestressed in such a way that it is held in the circumferential groove (5) counter to its prestress or spring force in the radial direction, the said coupling ring (4) being interrupted on its circumference, **in that** the circumferential groove (5) is interrupted on the inner side of the coupling region of the receiving part (2) by axial recesses or slots (7), into which radially inwardly protruding projections (8) of an axially displaceable sliding ring (9) engage, which projections (8) leave the coupling ring (4) non-deformed in the release position and load it from the outside and hold it such that it is deformed radially to the inside in an axial displacement position, and **in that** an annular groove (10) which, in the coupling position, is situated in the same diametral plane as the circumferential groove (5) on the receiving part (2) is provided on the plug-in part (3), which annular groove (10) can be displaced by the plug-in movement into the same diametral plane as the circumferential groove (5) on the receiving part (2), and into which annular groove (10) the coupling ring (4) can be pressed radially with a part of its cross section with the aid of the projections (8) of the sliding ring (9).

2. Plug-in coupling according to Claim 1, **characterized in that**, in its initial position in the uncoupled position, the coupling ring (4), on account of its internal stress, is recessed completely in the circumferential groove (5) of the receiving part (2) and/or is widened to such an extent that the plug-in part fits through it, and that the external cross section or external diameter of the coupling region of the plug-in part (3) is smaller than or equal to the internal diameter of the widened coupling ring (4).

3. Plug-in coupling according to Claim 1 or 2, **characterized in that** the projections (8) which protrude radially to the inside on the sliding ring (9) have a run-on slope (13) which rises in the axial direction counter to the plug-in direction and coupling direction of the sliding ring (9) and loads the outer side of the coupling ring (4) during the axial displacement of the sliding ring (9) in the axial coupling direction, and **in that**, as a result, the coupling ring (4) can be deformed radially to the inside and can be displaced into the annular groove (10) of the coupling region of the plug-in part (3).

4. Plug-in coupling according to Claim 3, **characterized in that** a stop (14) is provided at the rear end, in the sliding direction, of the run-on slopes (13) of the radially inwardly protruding projections (8), against which stop (14) the coupling ring (4) which is displaced radially inwardly by the projections (8) bears axially in the coupling position.

5. Plug-in coupling according to Claim 4, **characterized in that** a hollow (15) is provided at the rear end, in the axial displacing direction, of the run-on slope (13), the boundary of which hollow (15), which faces away from the run-on slope (13), forms the stop (14), and **in that**, in the coupling position, the coupling ring (4) engages in a positively locking manner into the respective hollow (15) of the actuating projections (8).

6. Plug-in coupling according to Claim 5, **characterized in that** the run-on slopes (13) or oblique faces on the inner-side projections (8) of the sliding ring (9) reach as far as a greater radial inner dimension than corresponds to the seat of the coupling ring (4) in the coupling position, and **in that**, during actuation of the sliding ring (9), the coupling ring (4) can be deformed or is deformed by way of the projections (8) of the said sliding ring (9) in the radial direction first of all radially to the inside beyond its coupling position and, at the end of the displacement of the sliding ring (8), is arranged such that it is latched, on account of the restoring force, automatically in the hollow (15) behind the run-on slopes (13) and therefore in its coupling position.

7. Plug-in coupling according to Claim 5 or 6, **characterized in that** the radially inwardly protruding projection (8) of the sliding ring (9) has an oblique transition (16) from its highest point into the hollow (15).

8. Plug-in coupling according to one of Claims 1 to 7, **characterized in that** a plurality of slots (7), for example three, four, five, six or more slots (7), are provided on the circumference of the coupling region of the receiving part (2) for a corresponding number of projections (8) on the sliding ring (9) and are distributed, in particular, uniformly in the circumferential direction.

9. Plug-in coupling according to one of Claims 1 to 8, **characterized in that** the width of the slots (7) in the coupling region of the receiving part (2) and the width of the projections (8) of the sliding ring (9) which engage therein correspond to one another, and **in that** the projections (8) can be displaced by way of a sliding fit relative to the slots (7).

## Revendications

1. Raccord enfichable (1) avec une partie femelle cylindrique (2) et avec une partie mâle (3) adaptée à celle-ci, pouvant être introduite axialement dans celle-ci au moins partiellement et ainsi fixée par complémentarité de forme en direction axiale, une bague d'accouplement (4) étant prévue dans la zone d'accouplement des deux parties assemblées par enfichage, qui, en position d'accouplement, agit par complémentarité de forme sur le côté intérieur de la zone d'accouplement de la partie femelle (2) et en même temps sur le côté extérieur de la zone d'accouplement de la partie mâle (3), **caractérisé en ce que** la partie femelle (2) présente dans sa zone d'accouplement une rainure périphérique (5) qui reçoit la bague d'accouplement (4), que la bague d'accouplement (4) est précontrainte de manière à être maintenue en direction radiale dans la rainure périphérique (5) à l'encontre de sa précontrainte ou force de ressort, la bague d'accouplement (4) étant interrompue sur sa périphérie, que la rainure périphérique (5) est interrompue sur le côté intérieur de la zone d'accouplement de la partie femelle (2) par des encoches ou fentes axiales (7), dans lesquelles s'engagent des saillies (8) dépassant radialement vers l'intérieur d'une bague coulissante (9) mobile axialement, qui, en position desserrée, laissent la bague d'accouplement (4) non déformée et, dans une position de coulissement axial, agissent sur elle par l'extérieur et la maintiennent déformée radialement vers l'intérieur, et que sur la partie mâle (3) est prévue une rainure annulaire (10) se trouvant dans le même plan diamétral que la rainure périphérique (5) de la partie femelle (2) dans la position d'accouplement, qui est déplaçable dans le même plan diamétral que la rainure périphérique (5) de la partie femelle (2) par le mouvement d'enfichage et dans laquelle la bague d'accouplement (4) peut être enfoncée radialement par une partie de sa section à l'aide des saillies (8) de la bague coulissante (9).

2. Raccord enfichable selon la revendication 1, **caractérisé en ce que** la bague d'accouplement (4), dans sa situation initiale en position non accouplée, en raison de sa contrainte propre, est entièrement enfoncée dans la rainure périphérique (5) de la partie femelle (2) et/ou suffisamment élargie pour que la partie mâle passe à travers elle, et que la section extérieure ou le diamètre extérieur de la zone d'accouplement de la partie mâle (3) est inférieur(e) ou égal(e) au diamètre intérieur de la bague d'accouplement (4) élargie.

3. Raccord enfichable selon la revendication 1 ou 2, **caractérisé en ce que** les saillies (8) dépassant radialement du côté intérieur sur la bague coulissante (9) ont un chanfrein d'accostage (13) montant à l'opposé en direction axiale du sens d'enfichage et du sens d'accouplement de la bague coulissante (9), qui, lors du déplacement axial de la bague coulissante (9) dans le sens d'accouplement axial, agit sur le côté extérieur de la bague d'accouplement (4), et que la bague d'accouplement (4) est de ce fait déformable radialement vers l'intérieur et peut être déplacée dans la rainure annulaire (10) de la zone d'accouplement de la partie mâle (3).

4. Raccord enfichable selon la revendication 3, **caractérisé en ce qu'**une butée (14) contre laquelle la bague d'accouplement (4) déplacée radialement vers l'intérieur par les saillies (8) s'appuie axialement en position d'accouplement est prévue à l'extrémité arrière dans le sens de coulissement des chanfreins d'accostage (13) des saillies (8) dépassant radialement vers l'intérieur.

5. Raccord enfichable selon la revendications 4, **caractérisé en ce qu'**un creux (15) dont la délimitation éloignée du chanfrein d'accostage (13) forme la butée (14) est prévu à l'extrémité arrière dans le sens de déplacement axial du chanfrein d'accostage (13), et que la bague d'accouplement (4) s'engage, en position d'accouplement, par complémentarité de forme dans le creux (15) respectif des saillies d'actionnement (8).

6. Raccord enfichable selon la revendication 5, **caractérisé en ce que** les chanfreins d'accostage (13) ou surfaces inclinées sur les saillies (8) du côté intérieur de la bague coulissante (9) s'étendent jusqu'à une dimension intérieure radiale plus grande que celle correspondant au siège de la bague d'accouplement (4) en position d'accouplement, et que la bague d'accouplement (4), lors de l'actionnement de la bague coulissante (9) avec ses saillies (8) en direction radiale, est d'abord déformable ou déformée radialement vers l'intérieur au-delà de sa position d'accouplement et, à la fin du déplacement de la bague coulissante (8), en raison de la force de rappel, s'enclenche d'elle-même dans le creux (15) derrière les chanfreins d'accostage (13) et donc dans sa position d'accouplement.

7. Raccord enfichable selon la revendication 5 ou 6, **caractérisé en ce que** la saillie (8) dépassant radialement vers l'intérieur de la bague coulissante (9) présente une transition inclinée (16) de son point le plus élevé au creux (15).

8. Raccord enfichable selon une des revendications 1 à 7, **caractérisé en ce que** plusieurs fentes (7), par exemple trois, quatre, cinq, six ou plus fentes (7) sont prévues à la périphérie de la zone d'accouplement de la partie femelle (2) pour un nombre correspondant de saillies (8) sur la bague coulissante (9) et en particulier réparties régulièrement en direction circonférentielle.

9. Raccord enfichable selon une des revendications 1 à 8, **caractérisé en ce que** la largeur des fentes (7) dans la zone d'accouplement de la partie femelle (2) et la largeur des saillies (8) de la bague coulissante (9) qui s'y engagent coïncident et que les saillies (8) sont déplaçables par rapport aux fentes (7) par un ajustement coulissant.
